# EUROPÄISCHE PATENTSCHRIFT

(11) **EP 0 955 485 B1**
(45) Veröffentlichungstag und Bekanntmachung des Hinweises auf die Patenterteilung: **22.09.2004**
(21) Anmeldenummer: 99890101.1
(22) Anmeldetag: 24.03.1999
(51) Int. Cl.: F16F 15/121, F16F 15/133, F16F 15/16, F16D 3/56

(54) **Drehschwingungsdämpfer bzw. drehelastische und schwingungsdämpfende Kupplung**
Torsional vibration damper, torsionally elastic and vibration damping coupling
Amortisseur de vibrations torsionelles, accouplement torsionel élastique et amortissant

(30) Priorität: 08.05.1998 AT 77798
(43) Veröffentlichungstag der Anmeldung: 10.11.1999
(73) Patentinhaber: Ellergon Antriebstechnik GmbH, 5300 Hallwang/Salzburg (AT)
(72) Erfinder: Geislinger, Matthias, Dipl. Ing., 5026 Salzburg (AT)
(74) Vertreter: Hübscher, Helmut, Dipl.-Ing.

(56) Entgegenhaltungen:
- DE-A- 3 023 300
- GB-A- 2 235 749
- US-A- 4 104 891
- US-A- 4 173 158
- US-A- 4 470 494

## Beschreibung

Die Erfindung bezieht sich auf einen bekannten Drehschwingungsdämpfer bzw. drehelastische und schwingungsdämpfende Kupplung mit zwischen einem Innenteil und einem Außenteil eingesetzten radialen Federelementen zur Drehmomentübertragung und über Drosselspalte miteinander in Verbindung stehenden flüssigkeitsgefüllten Kammern zur Dämpfung, wobei die Federelemente einerends im Außenteil zwischen Zwischenstücken eingespannt sind und andernends in Axialnuten des Innenteils eingreifen und die Kammern einerseits durch die Federelemente, anderseits durch zusätzliche, die Drosselspalte freilassende radiale Unterteilungen zwischen benachbarten Federelementen voneinander getrennt sind.

Bei diesen Dämpfern bzw. Kupplungen dienen die Federelemente, beispielsweise Federblätter oder Federpakete, zur Drehmomentenübertragung und ermöglichen gleichzeitig auf Grund ihrer federelastischen Eigenschaften eine Beeinflussung der auftretenden Drehschwingungen. Auf Grund der Elastizität der Federelemente kommt es außerdem bei der Momentenübertragung zu einer Relativverdrehung zwischen Innen- und Außenteil und damit zu einer Flüssigkeitsverdrängung zwischen den benachbarten flüssigkeitsgefüllten Kammern, was zu einem Durchströmen der Drosselspalte und damit zu einer hydraulischen Dämpfung führt. Bisher dienen zur Ausbildung der Kammern neben den sich vom Außenteil bis in die Axialnuten des Innenteils erstreckenden Federelementen als zusätzliche Unterteilung zwischen den Federelementen die Zwischenstücke zum Einspannen der Federelemente, welche Zwischenstücke sich radial einwärts über den eigentlichen Einspannbereich hinaus mit stegförmigen Ansätzen bis zur Außenumfangsfläche der Innenteilnabe erstrecken und hier die Drosselspalte freilassen. Im Bereich dieser radial recht weit innenliegenden Drosselspalte kommt es bei Drehbewegungen wegen der in den Kammern fliehkraftbedingt radial auswärts drängenden Flüssigkeit zu freien Hohlräumen, die gesteigerte Kavitationserscheinungen befürchten lassen. Außerdem bleibt konstrulctionsbedingt der Innenteil selbst im Durchmesser recht klein dimensioniert, wodurch der Anschluß des Innenteils beim Einbinden des Dämpfers bzw. der Kupplung in einen Antriebsstrang einen außenliegenden vergrößerten Anschlußflansch erfordert, um für die erforderliche Drehmomentenübertragung ausreichende radiale Schraubenabstände zu erreichen, welche Anschlußflansche den gesamten Platzbedarf der Dämpfer bzw. der Kupplungen entsprechend vergrößern.

Der Erfindung liegt daher die Aufgabe zugrunde, einen Dämpfer bzw. eine Kupplung der eingangs geschilderten Art zu schaffen, der bzw. die sich bei geringer Kavitationsanfälligkeit durch günstige Anschlußmöglichkeiten beim Einbau in einen Antriebsstrang und eine kompakte Bauweise auszeichnet.

Die Erfindung löst diese Aufgabe dadurch, daß die Unterteilungen dem Innenteil zugehören und jeweils aus einem zwischen den Axialnuten hochragenden Fußansatz und einem anschließenden, sich unter Freilassung des endseitigen Drosselspaltes bis zum gegenüberliegenden Zwischenstück erstreckenden Trennsteg bestehen, wobei in den Fußansätzen Bohrungen zum Einsatz von Anschlußschrauben vorgesehen sind. Durch die Zuordnung der Unterteilungen zum Innenteil werden die Drosselspalte radial auswärts verlegt, so daß die rotationsbedingt in den Außenumfangsbereich verdrängte Dämpfungsflüssigkeit eine Verringerung der Kavitationsgefahr in den Drosselspalten mit sich bringt. Außerdem entsteht durch die außenliegenden Drosselspalte im Bereich des Innenteils ein größerer nutzbarer Bauraum, der eine radial auswärts sich erstreckende Ausweitung des Innenteils ermöglicht, welche Ausweitung einerseits zur Ausgestaltung der Unterteilungen selbst herangezogen wird, anderseits aber auch ausreichend Platz bietet, um im Innenteil, und zwar im Radialhöhenbereich der Axialnuten oder auch außerhalb der Axialnuten, Bohrungen zum Einsatz von Anschlußschrauben zu setzen, wodurch der Innenteil ohne zusätzliche Anschlußflansche unmittelbar in einen Antriebsstrang eingebunden werden kann. Der radiale Abstand dieser Bohrungen von der Dämpfer- bzw. Kupplungsachse läßt sich dabei so groß wählen, daß die zu übertragenden Drehmomente zu keiner Überbeanspruchung der Schraubbefestigung führen.

Eine vorteilhafte Bauweise ergibt sich, wenn die Zwischenstücke einen im wesentlichen einem Sektor eines Kreisringes entsprechenden Grundriß aufweisen und sich die Trennstege der Unterteilungen bis zum Innenbogen der Zwischenstücke erstrecken. Damit werden die Zwischenstücke auf den eigentlichen Einspannbereich der Federelemente beschränkt und deren Innenbogen ergibt eine saubere äußere Spaltbegrenzung.

Die Unterteilungen können mit dem Innenteil einstückig hergestellt sein, es ist aber durchaus möglich, daß sich die Unterteilungen aus einem an der Innenteilnabe angeformten vorgewölbten Fußansatz und einem eigenen, an einer innenteilfesten Stirnplatte befestigten Trennsteg zusammensetzen, was trotz der mehrteiligen Bauweise ausreichend Platz für die Anordnung der Schraubenbohrungen im Fußansatzbereich bietet.

Aus fertigungstechnischen Gründen lassen sich die Unterteilungen aber auch durchaus als eigene Bauteile vorbereiten. So können die Unterteilungen aus einzelnen, an einer innenteilfesten Stirnplatte befestigten Trennklötzen bestehen, die entlang der Außenumfangsfläche der Innenteilnabe nebeneinandergereiht sind und zwischen ihren Fußansätzen die Axialnuten bilden, oder die Unterteilungen können sich aus einem eigenen Fußansatz und einem eigenen, an einer innenteilfesten Stirnplatte befestigten Trennsteg zusammensetzen, wobei die als Hülse vorgesehenen Fußansätze zwischen sich die Axialnuten bilden und zwischen innenteilfesten Stirnplatten eingespannt sind.

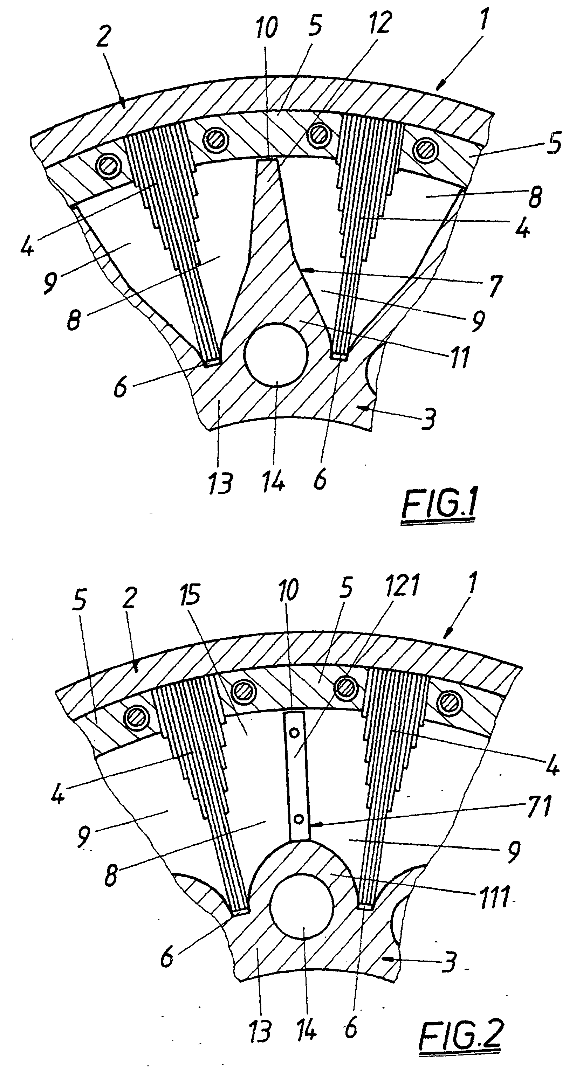

In der Zeichnung ist der Erfindungsgegenstand rein schematisch veranschaulicht, und zwar zeigen die
- Fig. 1, 2, 3 und 4: jeweils einen Ausschnitt aus vier verschiedenen Ausführungsbeispielen einer erfindungsgemäßen Kupplung im Querschnitt.

Eine drehelastische und schwingungsdämpfende Kupplung 1 weist einen Außenteil 2, einen Innenteil 3 und zwischen Außenteil und Innenteil eingesetzte radiale Federelemente 4 zur Drehmomentübertragung auf, welche Federelemente 4 einerends im Außenteil 2 zwischen Zwischenstücken 5 eingespannt sind und andernends in Axialnuten 6 des Innenteils 3 eingreifen. Zur Schwingungsdämpfung ist außerdem der Hohlraum zwischen Außenteil 2 und Innenteil 3 einerseits durch die radialen Federelemente 4, anderseits durch zusätzliche radiale Unterteilungen 7 zwischen den Federelementen 4 in einzelne Kammern 8, 9 unterteilt, welche Kammern 8, 9 im Bereich der Unterteilungen 7 über Drosselspalte 10 miteinander in Verbindung stehen, so daß durch drehschwingungsbedingte Relatiwerdrehungen von Innen- und Außenteil die Dämpfungsflüssigkeit aus den einen Kammern in die benachbarten Kammern verdrängt werden und es auf Grund des Durchströmens der Drosselspalte 10 zu einer hydraulischen Dämpfung kommt.

Die Unterteilungen 7 gehören dem Innenteil 3 zu und bestehen jeweils aus einem zwischen den Axialnuten 6 hochragenden Fußansatz 11 und einem anschließenden, sich radial auswärts bis zu den gegenüberliegenden Zwischenstücken 5 erstreckenden Trennsteg 12, wobei zwischen den im Grundriß einem Kreisringsektor entsprechenden Zwischenstücken 5 und dem freien Ende der Trennstege 12 die Drosselspalte 10 entstehen. Die von der Innenteilnabe 13 radial auswärts hochragenden Fußansätze 11 bieten nun ausreichend Platz zur Anordnung von Bohrungen 14 für Anschlußschrauben, so daß die Kupplung 1 innenteilseitig unmittelbar über diese Anschlußschrauben 14 in einen Antriebsstrang eingebunden werden können, ohne dazu einen eigenen außenliegenden Anschlußflansch zu benötigen.

Gemäß dem Ausführungsbeispiel nach Fig. 1 sind die Unterteilungen 7 einstückig und unmittelbar an den Innenteil 3 angeformt, aus herstellungstechnischen Gründen können die Unterteilungen aber auch teilweise oder ganz aus eigenen Bauteilen bestehen.

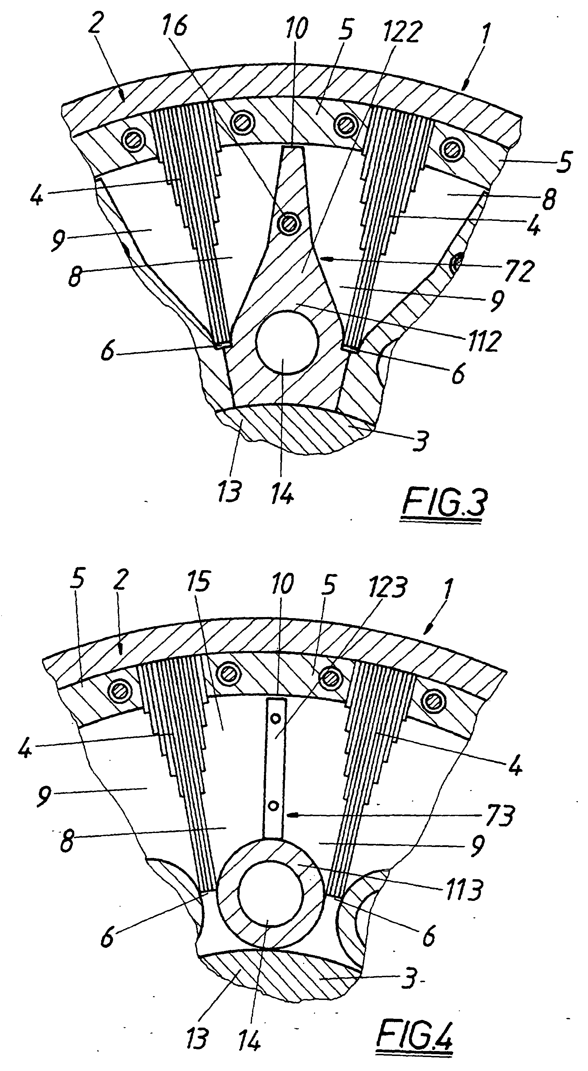

So sind, wie in Fig. 2 angedeutet, die Unterteilungen 71 stückweise zusammengesetzt, wobei nur der vorgewölbte Fußansatz 111 an der Innenteilnabe 13 angeformt ist und der Trennsteg 121 hingegen als eigener Bauteil am Fußansatz 111 anschließt, welcher Trennsteg 121 an einer innenteilfesten Stirnplatte 15 befestigt ist. Gemäß dem Ausführungsbeispiel nach Fig. 3 sind die Unterteilungen 72 als Trennklötze 122 vorgefertigt, die entlang der Außenumfangsfläche der Innenteilnabe 13 nebeneinandergereiht und über Schrauben 16 an einer innenteilfesten Stirnplatte 15 befestigt werden. Die Fußansätze 112 dieser Trennklötze 122 weisen wiederum die Bohrungen 14 für Anschlußschrauben auf und bilden zwischen sich die Axialnuten 6 für den Federeingriff.

Beim Ausführungsbeispiel nach Fig. 4 setzen sich die Unterteilungen 73 jeweils aus einem eigenen, als Hülse 113 vorgesehenen Fußansatz und einem eigenen Trennsteg 123 zusammen, wobei die Trennstege an einer innenteilfesten Stimplatte 15 befestigt und die Hülsen 113 zwischen zwei innenteilfesten Stirnplatten 15 eingespannt sind. Die Hülsen 113 bilden wiederum zwischen sich die Axialnuten 6 für den Federeingriff und dienen selbst als Bohrungen 14 für die Anschlußschrauben.

## Patentansprüche

1. Drehschwingungsdämpfer bzw. drehelastische und schwingungsdämpfende Kupplung (1) mit zwischen einem Innenteil (3) und einem Außenteil (2) eingesetzten radialen Federelementen (4) zur Drehmomentübertragung und über Drosselspalte (10) miteinander in Verbindung stehenden flüssigkeitsgefüllten Kammern (8, 9) zur Dämpfung, wobei die Federelemente (4) einerends im Außenteil (2) zwischen Zwischenstücken (5) eingespannt sind und andernends in Axialnuten (6) des Innenteils (3) eingreifen und die Kammern (8, 9) einerseits durch die Federelemente (4), anderseits durch zusätzliche, die Drosselspalte (10) freilassende radiale Unterteilungen (7) zwischen benachbarten Federelementen (4) voneinander getrennt sind, **dadurch gekennzeichnet, daß** die Unterteilungen (7, 71, 72, 73) dem Innenteil (3) zugehören und jeweils aus einem zwischen den Axialnuten (6) hochragenden Fußansatz (11, 111, 112, 113) und einem anschließenden, sich unter Freilassung des endseitigen Drosselspaltes (10) bis zum gegenüberliegenden Zwischenstück (5) erstreckenden Trennsteg (12, 121, 123) bestehen, wobei in den Fußansätzen (11, 111, 112, 113) Bohrungen (14) zum Einsatz von Anschlußschrauben vorgesehen sind.

2. Dämpfer bzw. Kupplung nach Anspruch 1, **dadurch gekennzeichnet, daß** die Zwischenstücke (5) einen im wesentlichen einem Sektor eines Kreisringes entsprechenden Grundriß aufweisen und sich die Trennstege (12, 121, 123) der Unterteilungen (7, 71, 72, 73) bis zum Innenbogen der Zwischenstücke (5) erstrecken.

3. Dämpfer bzw. Kupplung nach Anspruch 1 oder 2, **dadurch gekennzeichnet, daß** sich die Unterteilungen (71) aus einem an der Innenteilnabe (13) angeformten vorgewölbten Fußansatz (111) und einem eigenen, an einer innenteilfesten Stirnplatte (15) befestigten Trennsteg (121) zusammensetzen.

4. Dämpfer bzw. Kupplung nach Anspruch 1 oder 2, **dadurch gekennzeichnet, daß** die Unterteilungen (72) aus einzelnen, an einer innenteilfesten Stirnplatte (15) befestigten Trennklötzen (122) bestehen, die entlang der Außenumfangsfläche der Innenteilnabe (13) nebeneinandergereiht sind und zwischen ihren Fußansätzen (112) die Axialnuten (6) bilden.

5. Dämpfer bzw. Kupplung nach Anspruch 1 oder 2, **dadurch gekennzeichnet, daß** sich die Unterteilungen (73) aus einem eigenen Fußansatz (113) und einem eigenen, an einer innenteilfesten Stirnplatte (15) befestigten Trennsteg (123) zusammensetzen, wobei die als Hülsen vorgesehenen Fußansätze (113) zwischen sich die Axialnuten (6) bilden und zwischen innenteilfesten Stirnplatten (15) eingespannt sind.

## Claims

1. A torsional vibration damper or torsionally elastic and vibration damping coupling (1) with radial spring elements (4) inserted between an inner part (3) and an outer part (2) for the transmission of torque and liquid-filled chambers (8, 9) for damping, said chambers being in communication with one another via throttle gaps (10), the spring elements (4) being clamped at one end in the outer part (2) between intermediate members (5) and engaging at the other end in axial grooves (6) of the inner part (3) and the chambers (8, 9) being separated from one another on the one hand by the spring elements (4) and on the other hand by additional radial subdivisions (7), which leave the throttle gaps (10) free, between adjacent spring elements (4), **characterised in that** the subdivisions (7, 71, 72, 73) belong to the inner part (3) and consist in each case of a root attachment (11, 111, 112, 113) projecting upwards between the axial grooves (6) and an adjoining separating web (12, 121, 123) which, while leaving free the end throttle gap (10), extends as far as the opposite intermediate member (5), bores (14) being provided in the root attachments (11, 111, 112, 113) for the insertion of connection screws.

2. A damper or coupling according to claim 1, **characterised in that** the intermediate members (5) have a cross-section corresponding substantially to a sector of a circular ring and the separating webs (12, 121, 123) of the subdivisions (7, 71, 72, 73) extend as far as the inner arc of the intermediate members (5).

3. A damper or coupling according to claim 1 or 2, **characterised in that** the subdivisions (71) are made up of a curved root attachment (111) formed on the inner part hub (13) and an individual separating web (121) fixed on an end plate (15) fixed to the inner part.

4. A damper or coupling according to claim 1 or 2, **characterised in that** the subdivisions (72) consist of individual separating blocks (122) which are fixed on an end plate (15) fixed to the inner part and which are arranged side by side along the outer peripheral surface of the inner part hub (13) and form the axial grooves (6) between their root attachments (112).

5. A damper or coupling according to claim 1 or 2, **characterised in that** the subdivisions (73) consist of an individual root attachment (113) and an individual separating web (123) fixed on an end plate (15) fixed to the inner part, while the root attachments (113) provided in the form of sleeves form the axial grooves (6) between them and are clamped between end plates (15) fixed to the inner part.

## Revendications

1. Amortisseur de vibrations torsionelles, respectivement accouplement torsionel élastique et amortissant les vibrations, comprenant des éléments élastiques (4) radiaux, insérés entre une partie intérieure (3) et une partie extérieure (2) pour assurer la transmission de couple, et des chambres (8, 9) remplies de liquide, reliées entre elles par des interstices d'étranglement (10) pour assurer l'amortissement, les éléments élastiques (4), à une extrémité, étant enserrés dans la partie extérieure (2) entre des pièces intermédiaires (5) et, à l'autre extrémité, s'engageant dans des rainures axiales (6) de la partie intérieure (3), et les chambres (8, 9) étant séparées les unes des autres, d'une part, par les éléments élastiques (4), d'autre part, par des subdivisions radiales (7) supplémentaires, entre des éléments élastiques (4) voisins, laissant libres les interstices d'étranglement (10), **caractérisé en ce que** les subdivisions (7, 71, 72, 73) appartiennent à la partie intérieure (3) et sont formées chacune d'un appendice formant pied (11, 111, 112, 113), montant entre les rainures axiales (6), et d'une nervure de séparation (12, 121, 123) s'y raccordant, s'étendant jusqu'à la pièce intermédiaire (5) opposée en laissant libre l'interstice d'étranglement (10) côté extrémité, des perçages (14) étant prévus dans les appendices formant pied (11, 111, 112, 113), pour insertion de vis de raccordement.

2. Amortisseur respectivement accouplement selon la revendication 1, **caractérisé en ce que** les pièces intermédiaires (5) présentent un profil correspondant essentiellement à un secteur d'un anneau de cercle, et les nervures de séparation (12, 121, 123) des subdivisions (7, 71, 72, 73) s'étendant jusqu'à l'arc intérieur des pièces intermédiaires (5).

3. Amortisseur respectivement accouplement selon la revendication 1 ou 2, **caractérisé en ce que** les subdivisions (71) sont composées d'un appendice formant pied (111) à incurvation convexe, formé d'un seul tenant sur le moyeu de partie intérieure (13), et d'une nervure de séparation (121) propre, fixée sur une plaque frontale (15) fixée à la partie intérieure.

4. Amortisseur respectivement accouplement selon la revendication 1 ou 2, **caractérisé en ce que** les subdivisions (72) sont formées de blocs de séparation (122) individuels, fixés sur une plaque frontale (15) fixée à la partie intérieure, blocs de séparation alignés en rangée les uns à côté des autres le long de la surface périphérique extérieure du moyeu de partie intérieure (13) et formant les rainures axiales (6) entre leurs appendices formant pied (112).

5. Amortisseur respectivement accouplement selon la revendication 1 ou 2, **caractérisé en ce que** les subdivisions (73) sont composées d'un appendice formant pied (113) propre et d'une nervure de séparation (123) propre, fixée à une plaque frontale (15) fixée à la partie intérieure, les appendices formant pied (113), prévus sous forme de douilles, formant entre eux les rainures axiales (6) et étant enserrés entre des plaques frontales (15) fixées à la partie intérieure.
